(19) Europäisches Patentamt
European Patent Office
Office européen des brevets

(11) **EP 3 603 393 A1**

(12) **EUROPEAN PATENT APPLICATION**

(43) Date of publication:
**05.02.2020 Bulletin 2020/06**

(51) Int Cl.:
***A01N 37/48*** *(2006.01)*        ***A01N 43/90*** *(2006.01)*
***A01P 13/00*** *(2006.01)*

(21) Application number: **19198591.0**

(22) Date of filing: **13.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2014 US 201461927142 P**

(62) Document number(s) of the earlier application(s) in accordance with Art. 76 EPC:
**15710928.1 / 3 094 179**

(71) Applicant: **Adama Agan Ltd.**
**7710201 Ashdod (IL)**

(72) Inventors:
• **WINDREICH, Shlomo**
**5237699 Ramat-Gan (IL)**
• **NAHMOUD, Sergio**
**7775113 Ashdod (IL)**
• **ROSENBERG, David**
**7950500 Nir Israel (IL)**

(74) Representative: **Modiano, Micaela Nadia et al**
**Modiano & Partners**
**Thierschstrasse 11**
**80538 München (DE)**

Remarks:
This application was filed on 20-09-2019 as a divisional application to the application mentioned under INID code 62.

(54) **HERBICIDAL MIXTURES, COMPOSITIONS AND USES THEREOF**

(57) A herbicidal mixture for the selective control of weeds and grasses in crops of cultivated plants, comprising a) a herbicide which inhibits the action of protoporphyrinogen oxidase; and b) a herbicide which inhibits the action of ALS/AHAS, or an ester or salt of any of the foregoing, or a combination thereof.

EP 3 603 393 A1

**Description**

**TECHNICAL FIELD**

The present subject matter relates to a herbicidal formulation for controlling undesired vegetation.

**BACKGROUND**

The control of undesired vegetation is extremely important in order to achieve high crop efficiency. In many cases, while herbicides have an effect against a spectrum of weeds, they do not however fight a certain type of other weeds, which is also present in the crop cultures to be protected. Therefore, there is a strong need for mixing two or more herbicides.

Mixtures of selected herbicides have several advantages over the use of a single herbicide including (a) an increase in the spectrum of weeds controlled or an extension of weed control over a longer period of time, (b) an improvement in crop safety by using minimum doses of selected herbicides applied in combination rather than a single high dose of one herbicide, and (c) a delay in the appearance of resistant weed species to selected herbicides (Int. J. Agri. Biol., Vol. 6, No. 1, 2004, pages 209-212).

However, the activity and selectivity behavior of any specific mixture is difficult to predict since the behavior of each single herbicide in the mixture is often affected by the presence of the other(s) and the activity of the mixture may also vary considerably depending on chemical character, plant species, growth stage, and environmental conditions. Mostly, this practice results in reduced activity of the herbicides in the mixture.

Bifenox (methyl 5-(2,4-dichlorophenoxy)-2-nitrobenzoate), disclosed in US 3,652,645 is a protoporphyrinogen oxidase inhibitor and acts by cellular membrane disruption and by inhibition of photosynthesis. It is a selective herbicide, absorbed by the foliage, emerging shoots and roots, with limited translocation from roots and foliage to shoots. Bifenox is used for the control of annual broad-leaved weeds and some grasses in cereals, maize, sorghum, soya beans, rice, and some other crops.

Florasulam (N-(2,6-difluorophenyl)-8-fluoro-5-methoxy[1,2,4]triazolo[1,5-c]pyrimidine-2-sulfonamide), reported by A. R. Thompson et al. (Proc. Br. Crop Prot. Conf. - Weeds, 1999, 1, 73), is a branched chain amino acid (leucine, isoleucine and valine) synthesis (ALS or AHAS) inhibitor. It is taken up by root and shoots, and translocated in both xylem and phloem. Florasulam is used for the control of post-emergence control of broad-leaved weeds, especially *Galium aparine*, *Stellaria media*, *Polygonum convolvulus, Matricaria spp.* and various cruciferae, in cereals and maize.

**SUMMARY**

According to one aspect, the present subject matter provides a herbicidal mixture for the selective control of weeds and grasses in crops of cultivated plants, comprising a) a herbicide which inhibits the action of protoporphyrinogen oxidase; and b) a herbicide which inhibits the action of ALS/AHAS, or an ester or salt of any of the foregoing, or a combination thereof.

According to another aspect, the present subject matter provides a herbicidal composition for the selective control of weeds and grasses in crops of cultivated plants comprising a) a herbicide which inhibits the action of protoporphyrinogen oxidase; b) a herbicide which inhibits the action of ALS/AHAS; and c) at least one agriculturally acceptable carrier.

According to another aspect, the present subject matter provides a method of controlling undesired vegetation comprising applying to a locus of the undesired vegetation a herbicidal effective amount of a mixture comprising a) a herbicide which inhibits the action of protoporphyrinogen oxidase; b) a herbicide which inhibits the action of ALS/AHAS, or an ester or salt of any of the foregoing, or a combination thereof.

According to another aspect, the present subject matter provides a herbicidal mixture comprising bifenox and florasulam, esters, salts and/or combinations thereof.

According to one aspect, the present subject matter provides a synergistic herbicidal mixture for the selective control of weeds and grasses in crops of cultivated plants, comprising a) a herbicide which inhibits the action of protoporphyrinogen oxidase; and b) a herbicide which inhibits the action of ALS/AHAS, or an ester or salt of any of the foregoing, or a combination thereof.

According to another aspect, the present subject matter provides a synergistic composition for the selective control of weeds and grasses in crops of cultivated plants comprising a) a herbicide which inhibits the action of protoporphyrinogen oxidase; b) a herbicide which inhibits the action of ALS/AHAS; and c) at least one agriculturally acceptable carrier.

## DETAILED DESCRIPTION

Definitions

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.

As used herein, the phrase "agriculturally acceptable carrier" means carriers which are known and accepted in the art for the formation of formulations for agricultural or horticultural use.

As used herein, the term "crop" includes reference to a whole plant, plant organ (e.g., leaves, stems, twigs, roots, trunks, limbs, shoots, fruits etc.), plant cells, or plant seeds. This term also encompasses plant crops such as fruits. In yet another embodiment, the term "plant" may include the propagation material thereof, which may include seeds and spores, vegetative structures such as bulbs, corms, tubers, rhizomes, roots stems, basal shoots, stolons, and buds.

As used herein, the term "locus" includes not only areas where weeds may already be growing, but also areas where weeds have yet to emerge, and also to areas under cultivation.

As used herein, the term "post-emergence," refers to the application of the herbicide composition to the weeds that have emerged from the soil. The term "pre-emergence" refers to the application of the herbicide composition to a habitat, a weed, or soil, prior to the emergence of the weeds from the soil.

As used herein, the term "control of undesirable vegetation" refers to the interference with the normal growth and development of undesired vegetation. Examples of control activity include, but are not limited to, inhibition of root growth, inhibition of shoot growth, inhibition of shoot emergence, inhibition of seed production, or reduction of weed biomass.

As used herein, the term "effective amount" refers to an amount of the compound that, when ingested, contacted with or sensed, is sufficient to achieve a good level of control.

As used herein, the term "mixture" or "combination" refers, but is not limited to, a combination in any physical form, e.g., blend, solution, alloy, or the like.

As used herein, the term "surfactant" refers to any agriculturally acceptable material which imparts emulsifiability, stability, spreading, wetting, dispersibility, or other surface-modifying properties. Examples of suitable surfactants include, but are not limited to, non-ionic, anionic, cationic and ampholytic types such as alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired..

The term "a" or "an" as used herein includes the singular and the plural, unless specifically stated otherwise. Therefore, the terms "a," "an" or "at least one" can be used interchangeably in this application.

Throughout the application, descriptions of various embodiments use the term "comprising"; however, it will be understood by one of skill in the art, that in some specific instances, an embodiment can alternatively be described using the language "consisting essentially of' or "consisting of."

For purposes of better understanding the present teachings and in no way limiting the scope of the teachings, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, used of the term "about" herein specifically includes ±10% from the indicated values in the range. In addition, the endpoints of all ranges directed to the same component or property herein are inclusive of the endpoints, are independently combinable, and include all intermediate points and ranges.

Herbicidal Mixture

The present subject matter relates to a synergistic herbicidal mixture comprising a herbicide which inhibits the action of protoporphyrinogen oxidase and a herbicide which inhibits the action of ALS/AHAS.

The present subject matter relates to a synergistic herbicidal mixture comprising a herbicide which inhibits the action of protoporphyrinogen oxidase and a herbicide which inhibits the action of ALS/AHAS.

In one embodiment, the herbicide which inhibits the action of protoporphyrinogen oxidase is selected from the group comprising, acifluorfen-Na, azafenidin, benzfendizone, bifenox, butafenacil, carfentrazone-ethyl, chlomethoxyfen, cinidon-ethyl, fluazolate, flufenpyr-ethyl, flumioxazin, flumiclorac-pentyl, fluoroglycofen-ethyl, fluthiacet-methyl, fomesafen, halosafen, lactofen, oxadiazon, oxadiargyl, oxyfluorfen, pentoxazone, profluazol, pyraclonil, pyraflufen-ethyl, sulfentrazone, and thidiazimin. In a specific embodiment, the herbicide which inhibits the action of protoporphyrinogen oxidase is bifenox.

In one embodiment, the herbicide which inhibits the action of ALS/AHAS is selected from the group comprising amidosulfuron, azimsulfuron, bensulfuron-methyl, bispyribac-Na, chlorimuron-ethyl, chlorsulfuron, cinosulfuron, cloransulam-methyl, cyclosulfamuron, diclosulam, ethametsulfuron-methyl, ethoxysulfuron, flazasulfuron, florasulam, flucarbazone-Na, flumetsulam, flupyrsulfuron-methyl-Na, foramsulfuron, halosulfuron-methyl, imazamethabenz-methyl, imazamox, imazapic, imazapyr, imazaquin, imazethapyr, imazosulfuron, iodosulfuron, mesosulfuron, metosulam, metsulfuron-methyl, nicosulfuron, oxasulfuron, penoxsulam, primisulfuron-methyl, propoxycarbazone-Na, prosulfuron, pyrazosulfuron-ethyl, pyribenzoxim, pyriftalid, pyrithiobac-Na, pyriminobac-methyl, rimsulfuron, sulfometuron-methyl, sulfosulfuron, thifensulfuron-methyl, triasulfuron, tribenuron-methyl, trifloxysulfuron, triflusulfuron-methyl, and tritosulfuron. In a specific embodiment, the herbicide which inhibits the action of ALS/AHAS is florasulam.

In one embodiment, the present subject matter relates to a herbicidal mixture of bifenox and florasulam.

In one embodiment, the present subject matter relates to a synergistic herbicidal mixture of bifenox and florasulam, or an ester or salt of any of the foregoing, and/or a combination thereof.

The weight ratio of the herbicide which inhibits the action of protoporphyrinogen oxidase to the herbicide which inhibits the action of ALS/AHAS cannot generally be defined, as it varies depending upon various conditions such as the type of the formulation, weather conditions, the type of crop and the type of weeds.

In one embodiment, the weight ratio of the herbicide which inhibits the action of protoporphyrinogen oxidase to the herbicide which inhibits the action of ALS/AHAS in the mixture is from about 1:100 to 100:1. In another embodiment, the weight ratio is from about 0.5-1:90-100 to 90-100:0.5-1. In yet another embodiment, the weight ratio is from about 1-5:95-100 to 95-100:1-5. In a specific embodiment, the weight ratio of bifenox to florasulam is from about 90:1 to about 100:1.

The present subject matter further relates to a composition for the selective control of weeds and grasses in crops of cultivated plants comprising a herbicide which inhibits the action of protoporphyrinogen oxidase; a herbicide which inhibits the action of ALS/AHAS or an ester or salt of any of the foregoing, and/or a combination thereof; and an agriculturally acceptable carrier.

In a specific embodiment, the present subject matter further relates to a composition comprising bifenox and florasulam and an agriculturally acceptable carrier.

In yet another embodiment, the composition comprises at least one additional component selected from the group of surfactants, solid diluents and liquid diluents.

The present composition may include additional crop protection agents, for example for example insecticides, herbicides, fungicides, bactericides, nematicides, molluscicides, growth regulators, biological agents, fertilizers, or mixtures thereof. However, for the avoidance of doubt it is understood that such additional crop protection agents are unnecessary to achieve the synergistic effects of the present combinations. Accordingly, the present herbicidal compositions and herbicidal mixtures may be limited to containing a herbicide which inhibits the action of protoporphyrinogen oxidase (e.g. bifenox) and a herbicide which inhibits the action of ALS/AHAS (e.g. florasulam) as the only crop protection agents and/or herbicides present.

Without departing from the scope of the subject matter, the mixture and formulations of the present subject matter may be applied in conjunction with one or more co-herbicides to control a wider variety of undesirable vegetation. When used in conjunction with co-herbicides, the composition can be formulated with the co-herbicide or co-herbicides, tank mixed with the co-herbicide or co-herbicides or applied sequentially with the co-herbicide or co-herbicides. Some of the co-herbicides that can be employed in conjunction with the mixture of the present subject matter include but are not limited to 2,4-D, 2,4-D-butotyl, 2,4-D-butyl, 2,4-D-dimethylammonium, 2,4-D-diolamine, 2,4-D-ethyl, 2,4-D-2-ethylhexyl, 2,4-D- isobutyl, 2,4-D-isoctyl, 2,4-D-isopropyl, 2,4-D-isopropylammonium, 2,4-D-sodium, 2,4- D-isopropanolammonium, 2,4-D-trolamine, 2,4-DB, 2,4-DB-butyl, 2,4-DB- dimethylammonium, 2,4-DB-isoctyl, 2,4-DB-potassium, 2,4-DB-sodium, dichlorprop, dichlorprop-butotyl, dichlorprop-dimethylammonium, dichlorprop-isoctyl, dichlorprop- potassium, dichlorprop-P, dichlorprop-P-dimethylammonium, dichlorprop-P-potassium, dichlorprop-P-sodium, MCPA, MCPA-butotyl, MCPA-dimethylammonium, MCPA-2- ethylhexyl, MCPA-potassium, MCPA-sodium, MCPA-thioethyl, MCPB, MCPB-ethyl, MCPB-sodium, mecoprop, mecoprop-butotyl, mecoprop-sodium, mecoprop-P, mecoprop-P-butotyl, mecoprop-P-dimethylammonium, mecoprop-P-2-ethylhexyl, mecoprop-P-potassium, naproanilide, clomeprop, 2,3,6-TBA, dicamba, dicamba-butotyl, dicamba-diglycolamine, dicamba- dimethylammonium, dicamba-diolamine, dicamba-isopropylammonium, dicamba- potassium, dicamba-sodium, dichlobenil, picloram, picloram-dimethylammonium, picloram-isoctyl, picloram-potassium, picloram-triisopropanolammonium, picloram- triisopropylammonium, picloram-trolamine, triclopyr, triclopyr-butotyl, triclopyr- triethylammonium, clopyralid, clopyralid-olamine, clopyralid-potassium, clopyralid-triisopropanolammonium, aminopyralid, naptalam, naptalam- sodium, benazolin, benazolin-ethyl, quinclorac, quinmerac, diflufenzopyr, diflufenzopyr- sodium, fluroxypyr, fluroxypyr-2-butoxy-1-methylethyl, fluroxypyr-meptyl, chlorflurenol, chlorflurenol-methyl, aminocyclopyrachlor, aminocyclopyrachlor-methyl, aminocyclopyrachlor-potassium, chlorotoluron, diuron, fluometuron, linuron, isoproturon, metobenzuron, tebuthiuron, dimefuron, isouron, karbutilate, methabenzthiazuron, metoxuron, monolinuron, neburon, siduron, terbumeton, trietazine, metobromuron, simazine, atrazine, atratone, simetryn, prometryn, dimethametryn, hexazinone, metribuzin, teroutnyiazine, cyanazine, ametryn, cybutryne, triaziflam, indaziflam, terbutryn, propazine, metamitron, prometon, bromacil, bromacyl-lithium, lenacil, terbacil, propanil, cypromid, swep, desmedipham, phenmedipham, bromoxynil, bromoxynil-octanoate, bromoxynil-heptanoate, ioxynil, ioxynil-octanoate, ioxynil- potassium, ioxynil-sodium, pyridate, bentazone, bentazone-sodium, amicarbazone, methazole, pentanochlor, paraquat, diquat, nitrofen, chlomethoxyfen, bifenox, acifluorfen, acifluorfen-sodium, fomesafen, fomesafen-sodium, oxyfluorfen, lactofen, aclonifen, ethoxyfen-ethyl (HC-252), fluoroglycofen-ethyl, fluoroglycofen, chlorphthalim, flumioxazin, flumiclorac, flumiclorac-pentyl, cinidon-ethyl, fluthiacet, fluthiacet-methyl, oxadiargyl, oxadiazon, sulfentrazone, carfentrazone-ethyl, thidiazimin, pentoxazone, azafenidin, isopropazole, pyraflufen-ethyl, benzfendizone, butafenacil, saflufenacil, flupoxam, fluazolate, profluazol, pyraclonil, flufenpyr-ethyl, bencarbazone, ethyl[3-(2-chloro-4-fluoro-5-(3-methyl-2,6-dioxo-4-trifluoromethyl-3,6-dihydro-2H-pyrimidin-1-yl)phenoxy)pyridin-2-yloxy]acetate (SYN-523), norflurazon, chloridazon, metflurazon, pyrazolynate, pyrazoxyfen, benzofenap, topramezone, pyrasulfotole, amitrole, fluridone, flurtamone, diflufenican, methoxyphenone, clomazone, sulcotrione, mesotrione, tembotrione, tefuryltrione, bicyclopyrone, isoxaflutole, difenzoquat, difenzoquat-metilsulfate, isoxachlortole, benzobicyclon, picolinafen, beflubutamid, diclotop-methyl, diclotop, pyriphenop-sodium, fluazifop-butyl, fluazifop, fluazifop-P, fluazifop-P-butyl, haloxyfop- methyl, haloxyfop, haloxyfop-etotyl, haloxyfop-P, haloxyfop-P-methyl, quizalofop-ethyl, quizalofop-P, quizalofop-P-ethyl, quizalofop-P-tefuryl, cyhalofop-butyl, fenoxaprop-ethyl, fenoxaprop-P, fenoxaprop-P-ethyl, metamifop-propyl, metamifop, clodinafop-propargyl, clodinafop, propaquizafop, alloxydim-sodium, alloxydim, clethodim, sethoxydim, tralkoxydim, butroxydim, tepraloxydim, profoxydim, cycloxydim, flamprop-M-methyl, flamprop-M, flamprop-M- isopropyl, chlorimuron-ethyl, chlorimuron, sulfometuron-methyl, sulfometuron, primisulfuron-methyl, primisulfuron, bensulfuron-methyl, bensulfuron, chlorsulfuron, metsulfuron-methyl, metsulfuron, cinosulfuron, pyrazosulfuron-ethyl, pyrazosulfuron, azimsulfuron, rimsulfuron, imazosulfuron, cyclosulfamuron, prosulfuron, flupyrsulfuron-methyl-sodium, flupyrsulfuron, triflusulfuron-methyl, triflusulfuron, halosulfuron-methyl, halosulfuron, thifensulfuron-methyl, thifensulfuron, ethoxysulfuron, oxasulfuron, ethametsulfuron, ethametsulfuron-methyl, iodosulfuron, iodosulfuron-methyl-sodium, sulfosulfuron, triasulfuron, tribenuron-methyl, tribenuron, tritosulfuron, foramsulfuron, trifloxysulfuron, trifloxysulfuron-sodium, mesosulfuron, mesosulfuron-methyl, orthosulfamuron, flucetosulfuron, amidosulfuron, propyrisulfuron, metazosulfuron, iofensulfuron, flumetsulam, metosulam, diclosulam, cloransulam-methyl, florasulam, penoxsulam, pyroxsulam, imazapyr, imazapyr-isopropylammonium, imazethapyr, imazethapyr- ammonium, imazaquin, imazaquin-ammonium, imazamox, imazamox-ammonium, imazamethabenz, imazamethabenz-methyl, imazapic, pyrithiobac-sodium, bispyribac-sodium, pyriminobac-methyl, pyribenzoxim, pyriftalid, pyrimisulfan, triafamone, flucarbazone, flucarbazone-sodium, propoxycarbazone-sodium, propoxycarbazone or thiencarbazone, glyphosate, glyphosate-sodium, glyphosate-potassium, glyphosate-ammonium, glyphosate-diammonium, glyphosate-isopropylammonium, glyphosate-trimesium, glyphosate-sesquisodium, glufosinate, glufosinate-ammonium, glufosinate-P, glufosinate-P-ammonium, glufosinate-P-sodium, bilanafos, bilanafos-sodium, cinmethylin, trifluralin, oryzalin, nitralin, pendimethalin, ethalfluralin, benfluralin, prodiamine, butralin, dinitramine, bensulide, napropamide, propyzamide, pronamide, amiprofos-methyl, butamifos, anilofos, piperophos, propham, chlorpropham, barban, carbetamide, daimuron, cumyluron, bromobutide, methyldymron, asulam, asulam-sodium, dithiopyr, thiazopyr, chlorthal-dimethyl, chlorthal, diphenamid, alachlor, metazachlor, butachlor, pretilachlor, metolachlor, thenylchlor, pethoxamid, acetochlor, propachlor, dimethenamid, dimethenamid-P, propisochlor, dimethachlor, molinate, dimepiperate, pyributicarb, EPTC, butylate, vernolate, pebulate, cycloate, prosulfocarb, esprocarb, thiobencarb, triallate, diallate, orbencarb, etobenzanid, flufenacet, mefenacet, tridiphane, cafenstrole, fentrazamide, oxaziclomefone, indanofan, benfuresate, pyroxasulfone, fenoxasulfone, dalapon, dalapon-sodium, TCA-sodium, trichloroacetic acid, MSMA, DSMA, CMA, endothall, endothall-dipotassium, endothall-sodium, endothall-mono(N,N-dimethylalkylammonium), ethofumesate, sodium chlorate, pelargonic acid (nonanoic acid), fosamine, fosamine-ammonium, pinoxaden, ipfencarbazone, aclolein, ammonium sulfamate, borax, chloroacetic acid, sodium chloroacete, cyanamide, methylarsonic acid, dimethylarsinic acid, sodium dimethylarsinate, dinoterb, dinoterb-ammonium, dinoterb-diolamine, dinoterb-acetate, DNOC, ferrous sulfate, flupropanate, flupropanate-sodium, isoxaben, mefluidide, mefluidide-diolamine, metam, metam-ammonium, metam-potassium, metam-sodium, methyl isothiocyanate, pentachlorophenol and sodium pentachlorophenoxide.

The present compositions can be made at the time of use, or diluted. The present compositions can also be concentrated compositions, or so-called "ready-to-use" compositions, that is to say, compositions ready for use.

The present composition may be employed or prepared in any conventional form, for example, in the form of a twin pack, or for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), suspension concentrates, dusts (DP), oil-miscible solutions (OL), seed-dressing products, granules (GR) in the form of microgranules, spray granules, coated granules and absorption granules, granules for soil application or broadcasting, water-soluble granules (SG), water-dispersible granules (WDG), ULV formulations, microcapsules or waxes. These individual formulation types are known in the art.

In an embodiment, the amount of the mixture of active ingredients in the composition is about 0.1-99 wt. %, about 0.1-95 wt. %, or about 0.1-90 wt. %, based on the total weight of the composition. In another embodiment, the amount of the mixture of active ingredients in the composition is about 30-50 wt %, based on the total weight of the composition. In yet another embodiment, the amount of the mixture of active ingredients in the composition is from about 0.1%, 0.5%, 1%, 1.5%, 2%, 2.5%, 3%, 3.5%, 4%, 4.5%, 5% to about 90%, 93%, 95%, 98%, 99% based on the total weight of the composition.

In a specific embodiment, the amount of the mixture of active ingredients in the composition is about 42 wt %, based on the total weight of the composition.

Examples of suitable liquid carriers potentially useful in the present compositions include but are not limited to water; aromatic hydrocarbons such as alkylbenzenes and alkylnaphthalenes; alcohols such as methanol, cyclohexanol, and decanol; ethylene glycol; polypropylene glycol; dipropylene glycol; N,N-dimethylformamide; dimethylsulfoxide; N-alkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; ketones such as cyclohexanone, 2-heptanone, isophorone, and 4-hydroxy-4-methyl-2-pentanone; and the like.

Examples of suitable solid carriers potentially useful in the present compositions include but are not limited to mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; fertilizers such as ammonium sulfate, ammonium phosphate, ammonium nitrate, ureas, and products of vegetable origin, such as cereal meal, tree bark meal, wood meal, and nutshell meal; cellulose powders; and other solid carriers.

Other ingredients, such as wetting agents, anti-foaming, adhesives, neutralizers, thickeners, binders, sequestrates, fertilizers, biocides, stabilizers, buffers or anti-freeze agents, may also be added to the present compositions in order to increase the stability, density, and viscosity of the described compositions.

Additionally, the present subject matter provides a method of controlling undesired vegetation comprising applying to a locus of the undesired vegetation a herbicidally effective amount of a) a herbicide which inhibits the action of protoporphyrinogen oxidase; b) a herbicide which inhibits the action of ALS/AHAS, or an ester or salt of any of the foregoing, and/or a combination thereof.

In an embodiment, the present subject matter provides a method of controlling undesired vegetation comprising applying to a locus of the undesired vegetation a composition comprising an a) a herbicide which inhibits the action of protoporphyrinogen oxidase; b) a herbicide which inhibits the action of ALS/AHAS, or an ester or salt of any of the foregoing, and/or a combination thereof; and at least one agriculturally acceptable carrier.

In a specific embodiment, the herbicide which inhibits the action of protoporphyrinogen oxidase is bifenox. In another specific embodiment, the herbicide which inhibits the action of ALS/AHAS is florasulam.

In a specific embodiment, the present subject matter relates to a method of controlling undesired vegetation comprising applying to a locus of the undesired vegetation a herbicidally effective amount of a mixture of bifenox and florasulam.

The mixtures and the herbicidal compositions can be applied pre-plant incorporated, pre- or post-emergence.

As used in the present methods, the herbicidal compositions and herbicidal mixtures discussed herein may be applied jointly or in a succession. That is, each of the herbicide which inhibits the action of protoporphyrinogen oxidase (e.g. bifenox) and the herbicide which inhibits the action of ALS/AHAS (e.g. florasulam) may be applied jointly or in succession. In one example, the herbicide which inhibits the action of protoporphyrinogen oxidase (e.g. bifenox) and the herbicide which inhibits the action of ALS/AHAS (e.g. florasulam) are prepared separately, and the individual formulations are applied as is, or diluted to predetermined concentrations. In a further example the herbicide which inhibits the action of protoporphyrinogen oxidase (e.g. bifenox) and the herbicide which inhibits the action of ALS/AHAS (e.g. florasulam) are prepared separately, and the formulations are mixed when diluted to a predetermined concentration. In another example, the herbicide which inhibits the action of protoporphyrinogen oxidase (e.g. bifenox) and the herbicide which inhibits the action of ALS/AHAS (e.g. florasulam) are formulated together, and the formulation is applied as it is, or the formulation is diluted to a predetermined concentration.

In an embodiment, the mixture is applied on crops which include one or more of cereals, wheat, barley, oats, winter wheat, spring wheat, winter barley, spring barley, triticale, cereal rye, winter durum wheat, spring durum wheat, winter oat, spring oat, fodder cereals, maize, ray-grass, cocksfoot, fescue, timothy, grass for seed and grassland. That is, the locus of undesired vegetation may contain one or more of these crops.

In yet another embodiment, the undesired vegetation may include one or more of *Brassica napus, Brassica*

*nigra, Arctotheca calendula, Fallopia convolvulus, Sinapis arvensis, Stellaria media, Sonchus oleraceus, Buglossoides arvense, Ipomoea lonchophylla, Crassula spp., Lamium spp., Lamium amplexicaule, Fumaria densiflora, Rumex spp., Emex australis, Chenopodium spp., Chenopodium album, Senecio spp., Senecio vulgaris, Centaurea cyanus, Fumaria spp., Sisymbrium officinale, Melilotus indicus Marrubium vulgare, Lythrum hyssopifolia, Mesembryanthemum spp., Sisymbrium orientale, Sisymbrium irio, Erodium botrys, Cerastium glomeratum, Matthiola longipetala, Echium plantagineum, Lepidium spp., Lactuca serriola, Scleroblitum atriplicinum, Papaver hybridum, Carthamus lanatus, Anagallis arvensis, Capsella bursa-pastoris, Chondrilla juncea, Rumex spp., Onopordum acaulon, Juncus bufonius, Polygonum spp., Polygonum convolvulus, Polygonum patulum, Rapistrum rugosum, Silybum marianum, Vicia sativa, Lupinus spp., Carrichtera annua, Raphanus raphanistrum, Brassica tournefortii, Polygonum aviculare, Malva parviflora, Solanum nigrum, Amaranthus retroflexus, Galium aparine, Matricaria spp., Matricaria recutita, Matricaria chamomilla, Veronica spp., Papaver rhoeas, Viola arvensis, Ranunculus repens, Geranium spp., Volunteer Oilseed Rape,* and *Myosotis arvensis.*

In a further embodiment, the undesired vegetation may include one or more of *Galium aparine, Brassica nigra, Capsella bursa-pastoris, Fallopia convolvulus, Matricaria Spp., Matricaria chamomilla, Viola arvensis, Stellaria media, Veronica spp., Lamium spp., Myosotis arvensis, Volunteer Oilseed Rape, Senecio vulgaris, Centaurea cyanus, Papaver rhoeas, Polygonum spp.,* and *Chenopodium spp.*

The herbicidally effective amounts of the herbicide which inhibits the action of protoporphyrinogen oxidase to the herbicide which inhibits the action of ALS/AHAS cannot generally be defined, as it varies depending upon various conditions such as the type of the formulation, weather conditions, the type of crop and the type of weeds.

In an embodiment, the herbicidal mixture is applied to the locus of undesired vegetation in an amount of from 1 to 1000 g/ha. In a further embodiment, the herbicidal mixture is applied in an amount of from 100 to 600 g/ha. In an embodiment, the herbicidal mixture is applied in an amount of from 450-500 g/ha. In another embodiment, the herbicidal mixture is applied in an amount of from 700-750 g/ha.

In a specific embodiment, the mixture of the herbicide which inhibits the action of protoporphyrinogen oxidase and the herbicide which inhibits the action of ALS/AHAS is applied to the locus of undesired vegetation in an amount of 485 g/ha. In yet another specific embodiment, the mixture of bifenox and florasulam is applied in an amount of 485 g/ha. Correspondingly, the amount of the herbicide which inhibits the action of protoporphyrinogen oxidase (e.g. bifenox) is applied at a rate of between 400 g/ha to 550 g/ha, and the amount of the herbicide which inhibits the action of ALS/AHAS (e.g. florasulam) is applied at a rate of between 0.1 to 50 g/ha. The amount of the herbicide which inhibits the action of ALS/AHAS (e.g. florasulam) may be applied at a rate of 1 to 10 g/ha. In a specific embodiment, bifenox may be applied at a rate of 480 g/ha and florasulam may be applied at a rate of 5 g/ha.

In an another specific embodiment, the mixture of the herbicide which inhibits the action of protoporphyrinogen oxidase and the herbicide which inhibits the action of ALS/AHAS is applied to the locus of undesired vegetation in an amount of about 727 g/ha. In yet another specific embodiment, the mixture of bifenox and florasulam is applied in an amount of about 727 g/ha. Correspondingly, the amount of the herbicide which inhibits the action of protoporphyrinogen oxidase (e.g. bifenox) is applied at a rate of between 630 g/ha to 865 g/ha, and the amount of the herbicide which inhibits the action of ALS/AHAS (e.g. florasulam) at a rate of between 1 to 10 g/ha. In a specific embodiment, bifenox may be applied at a rate of 720 g/ha and florasulam may be applied at a rate of 7.5 g/ha.

In an embodiment, the herbicidal mixture is applied to the locus of undesired vegetation in an amount, or at a rate of application, of from 0.01 to 100 liter/ha. In yet another embodiment, the herbicidal mixture is applied in an amount of from 0.1 to 10 liter/ha. In another embodiment, the herbicidal mixture is applied in an amount of from 0.1 to 1 liter/ha.

In a specific embodiment, the mixture is applied to the locus of undesired vegetation in an amount of 0.1 liter/ha. In yet another specific embodiment, the mixture is applied in an amount of 0.25 liter/ha. In still another specific embodiment, the mixture is applied in an amount of 0.5 liter/ha. In still yet another specific embodiment, the mixture is applied in an amount of 0.75 liter/ha. In a further specific embodiment, the mixture is applied in an amount of 2 liter/ha. In yet another specific embodiment, the mixture is applied in an amount of 1 liter/ha. In a further embodiment, the mixture is applied in an amount of 1.5 liter/ha.

In another embodiment, the present subject matter provides a kit comprising the herbicidal mixture as described herein, or components thereof. Such kits may comprise, in addition to the aforementioned active components, one or more additional active and/or inactive ingredients, either within the provided herbicidal composition or separately. Certain kits comprise a herbicide which inhibits the action of protoporphyrinogen oxidase and a herbicide which inhibits the action of ALS/AHAS or an esters or salt of any of the foregoing, and/or a combination thereof, each in a separate container, and each optionally combined with a carrier.

In an embodiment, the kit comprises bifenox and florasulam.

A synergistic effect exists wherever the action of a combination of active components is greater than the sum of the action of each of the components alone. Therefore, a synergistically effective amount (or an effective amount of a synergistic composition or combination) as discussed herein is an amount that exhibits greater pesticidal activity than the sum of the pesticidal activities of the individual components.

Comparison of results between formulations, mixtures and individual herbicides may be accomplished by a number of different methods. The synergy of the mixture or formulation may be calculated, the %survival of the weeds may be determined, %efficacy of the herbicide may be determined and the amount of biomass of the weeds may be determined, visually or otherwise. It may be appreciated that biomass may be defined as the organic material present on the weeds. In some embodiments, the application of herbicides may diminish the biomass of weeds. This may be done by preventing the weed to grow beyond a certain point and/or prevent the weed from developing seeds and/or leaves and/or branches and/or other parts of the plant.

In the context of the present subject matter, the term "synergy" is as defined by Colby S. R. in an article entitled "Calculation of the synergistic and antagonistic responses of herbicide combinations" published in the journal Weeds, 1967, 15, p. 20-22, incorporated herein by reference in its entirety. The action expected for a given combination of three active components can be calculated as follows:

$$E = X + Y - \frac{XY}{100}$$

in which E represents the expected percentage of pesticidal control for the combination of the three pesticides at defined doses (for example equal to x, y and z respectively), X is the percentage of herbicidal control observed by bifenox at a defined dose (equal to x), Y is the percentage of herbicidal control observed by florasulam at a defined dose (equal to y). When the percentage of herbicidal control observed for the combination is greater than the expected percentage, there is a synergistic effect. When the percentage of control observed for the combination is equal to the expected percentage, there is an additive effect and wherein the percentage of herbicidal control observed for the combination is lower than the expected percentage, there is an antagonistic effect.

**EXPERIMENTAL DETAILS**

Formulation Example

One exemplary embodiment of the ready mix suspension concentrate formulation is illustrated in Table 1, below:

TABLE 1

| Ingredient | % w/w |
|---|---|
| Bifenox | 41.44 |
| Florasulam | 0.44 |
| Triethanolamine, with Poly(oxyethylene) Tristyrylphenyl Ether Phosphate | 2.54 |
| Hydrated Magnesium Aluminum Silicate, Fuller's Earth (Mg,Al)$_5$Si$_8$O$_{22}$(OH)$_4$ & SiO$_2$ | 0.42 |
| Xanthan gum | 0.17 |
| Propylene glycol | 4.24 |
| Polydimethylsiloxan | 0.25 |
| 1,2-Benzisothiazol-3(2H)-one | 0.09 |
| Water | 50.41 |
| d= 1.080 g/l. | |

Example 1

In this example bifenox with florasulam were paired in order to control poppy in the areas where this species has developed populations resistant to the sulfonilureas, with partial cross-resistance to florasulam.

The poppy seeds were vernalized at 4 °C for 14 days in order to break dormancy. The vernalized seeds were then put into germination boxes containing a substrate of 0.6% agar and 0.2% KNO3 and placed in a germination chamber under the following conditions: 12 hours of light at 25 °C and 12 hours of darkness at 15 °C.

After 7-8 days, the germinated seeds were transplanted into trays (24x30x9 cm) containing a substrate composed of 60% soil from Legnaro, 15% sand, 15% perlite and 10% peat. The experiment was conducted in a heated greenhouse. Fifteen days after transplanting, the seedlings were thinned and counted. Each replication was composed of a tray containing 15-20 seedlings.

Six herbicide treatments were compared:

a) Bifenox 480 g/l + Florasulam 5 g/l SC formulation (Application Rate of 1.0 l/ha)

b) Bifenox 480 g/l + Florasulam 5 g/l SC formulation (Application Rate of 1.5 l/ha)

c) Florasulam 50 g/l SC(Application Rate of 0.11/ha)

d) Florasulam 50 g/l SC (Application Rate of 0.15 l/ha)

e) Bifenox 480 g/l (commercially available as Fox) (Application Rate of 1.0 1/ha)

f) Bifenox 480 g/l (commercially available as Fox) (Application Rate of 1.5 l/ha)

The treatments were done 20 days after transplanting when the plants were at the 4-6 leaf stage using a precision bench sprayer with TeeJet XR11002-VK fan nozzles, at a volume of 300 L/ha, working pressure of 215 kPa and speed of 0.75 m/sec.

The experimental scheme was completely randomized, with 3 replicate.

Three additional trays for each population were left untreated for comparison in the visual estimate of biomass (VEB). At 22 days after treatment, the number of surviving plants was counted and VEB was made, attributing 100% to the untreated control plants and 0% to the dead plants.

Results

Table 1 - Survival% and VEB of poppy populations

|  | Herbicide Treatment | Application Rate (L/ha) | # of Trials | Survival (%) (Average) | VEB (%) (Average) |
|---|---|---|---|---|---|
| Poppy Population #1 | Florasulam | 0.1 | 3 | 40.52 | 50.00 |
|  | Florasulam | 0.15 | 3 | 34.21 | 53.33 |
|  | Bifenox | 1.0 | 3 | 88.77 | 40.00 |
|  | Bifenox | 1.5 | 3 | 78.70 | 46.67 |
|  | Bifenox+Florasulam | 1.0 | 3 | 52.84 | 13.33 |
|  | Bifenox+Florasulam | 1.5 | 3 | 21.15 | 10.00 |
| Poppy Population #2 | Florasulam | 0.1 | 3 | 26.93 | 13.33 |
|  | Florasulam | 0.15 | 3 | 38.85 | 46.67 |
|  | Bifenox | 1.0 | 3 | 92.32 | 76.67 |
|  | Bifenox | 1.5 | 3 | 59.31 | 33.33 |
|  | Bifenox+Florasulam | 1.0 | 3 | 44.68 | 16.67 |
|  | Bifenox+Florasulam | 1.5 | 3 | 18.26 | 10.00 |

As can be seen in Table 1, the mixture bifenox+florasulam reduced the VEB more than single herbicides, with a good general control of the different populations, especially at an application rate of 1.5 l/ha. At an application rate of 1.5 l/ha, the survival rate of the poppy population was the lowest when the bifenox/florasulam formulation was applied in comparison to the survival rate when bifenox and florasulam were applied individually.

Example 2

Table 2 - Efficacy % - Application on Cereals

| Weed | Number of trials | % of Efficacy | | | |
|---|---|---|---|---|---|
| | | Bifenox 480 g/l + Florasulam 5 g/l SC Formulation Application rate = 1.0 l/ha | | Tank Mix of Bifenox 480 g/l + Florasulam 50 g/l SC Application Rate = 1.0 l/ha (bifenox) + 0.1 l/ha (florasulam) | |
| | | MEAN | Minimum-Maximum | MEAN | Minimum-Maximum |
| *Galium aparine* | 4 | 84,2 | (67,0-100) | 69,4 | (20,0-100) |
| *Matricaria recutita* | 1 | 78,0 | - | 68,0 | - |
| *Papaver rhoeas* | 5 | 81,2 | (60,0-96,5) | 72,8 | (40,0-96,4) |

As shown in Table 2, application of the bifenox/florasulam SC formulation provided better results with respect to the efficacy of the herbicides when compared to the tank-mix of bifenox and florasulam. Although only three weeds are shown in the above table 2, it can be appreciated that similar efficacy results may be obtained when the herbicides are applied to different weeds.

While the present subject matter has been shown and described with reference to preferred embodiments thereof, it will be understood by those skilled in the art that many alternatives, modifications and variations may be made thereto without departing from the spirit and scope thereof. Accordingly, it is intended to embrace all such alternatives, modifications, and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference.

The present invention is further defined by the following items:

1. A herbicidal mixture for the selective control of weeds and grasses in crops of cultivated plants, comprising a) a herbicide which inhibits the action of protoporphyrinogen oxidase; and b) a herbicide which inhibits the action of ALS/AHAS, or an ester or salt of any of the foregoing, or a combination thereof.

2. The herbicidal mixture of item 1, wherein the herbicide which inhibits the action of protoporphyrinogen oxidase is bifenox.

3. The herbicidal mixture of item 1 or 2, wherein the herbicide which inhibits the action of ALS/AHAS is florasulam.

4. The herbicidal mixture of any one of items 1-3, wherein the weight ratio of the herbicide which inhibits the action of protoporphyrinogen oxidase, to the herbicide which inhibits the action of ALS/AHAS is from 1:100 to 100:1.

5. The herbicidal mixture of item 4, wherein the weight ratio of the herbicide which inhibits the action of protoporphyrinogen oxidase, to the herbicide which inhibits the action of ALS/AHAS is from 90:1 to about 100:1.

6. The herbicidal mixture of any one of items 1-5, wherein the herbicide which inhibits the action of protoporphyrinogen oxidase, and the herbicide which inhibits the action of ALS/AHAS are applied jointly or in a succession.

7. The herbicidal mixture of any one of items 1-6, wherein said mixture is used to provide a rate of application of from 0.1 to 10 liter/ha.

8. The herbicidal mixture of item 7, wherein said mixture is used to provide a rate of application of 1 liter/ha.

9. The herbicidal mixture of item 7, wherein said mixture is used to provide a rate of application of 1.5 liter/ha.

10. The herbicidal mixture of any one of items 1-6, wherein the mixture is applied in an amount of from 100 to 600 g/ha.

11. The herbicidal mixture of item 10, wherein the amount of the herbicide which inhibits the action of protoporphyrinogen oxidase is 480 g/ha and the amount of the herbicide which inhibits the action of ALS/AHAS is 5 g/ha.

12. A herbicidal composition for the selective control of weeds and grasses in crops of cultivated plants comprising a) a herbicide which inhibits the action of protoporphyrinogen oxidase; b) a herbicide which inhibits the action of ALS/AHAS; and c) at least one agriculturally acceptable carrier.

13. The composition of item 12, further comprising at least one surfactant, solid diluent, liquid diluent, or a combination thereof.

14. The composition of item 12 or 13, wherein the herbicide which inhibits the action of protoporphyrinogen oxidase is bifenox.

15. The composition of any one of items 12-14, wherein the herbicide which inhibits the action of ALS/AHAS is florasulam.

16. The composition of any one of items 12-15, wherein the weight ratio of the herbicide which inhibits the action of protoporphyrinogen oxidase, to the herbicide which inhibits the action of ALS/AHAS is from 1:100 to 100:1.

17. The composition of item 16, wherein the weight ratio of the herbicide which inhibits the action of protoporphyrinogen oxidase, to the herbicide which inhibits the action of ALS/AHAS is from 90:1 to about 100:1.

18. The composition of any one of items 12-17, wherein said composition is applied at a rate of application of from 0.1 to 10 liter/ha.

19. The composition of item 18, wherein said composition is applied at a rate of application of 1 liter/ha.

20. The composition of item 18, wherein said composition is applied at a rate of application of 1.5 liter/ha.

21. The composition of any one of items 12-17, wherein said composition is applied in an amount of from 100 to 600 g/ha.

22. A herbicidal mixture comprising bifenox and florasulam, esters, salts and/or combinations thereof.

23. The herbicidal mixture of item 22, wherein the weight ratio of bifenox to florasulam is from 1:100 to 100:1.

24. The herbicidal mixture of item 23, wherein the weight ratio of bifenox to florasulam is from 90:1 to about 100:1

25. The herbicidal mixture of any one of items 22-24, wherein bifenox and florasulam are applied jointly or in a succession.

26. The herbicidal mixture of any one of items 22-25, wherein said mixture is used to provide a rate of application of from 0.1 to 10 liter/ha.

27. The herbicidal mixture of item 26, wherein said mixture is used to provide a rate of application of 1 liter/ha.

28. The herbicidal mixture of any one of items 22-27, wherein the mixture is applied in an amount of 485 g/ha.

29. The herbicidal mixture of item 28, wherein the amount of bifenox is 480 g/ha and the amount of florasulam is 5 g/ha.

30. A synergistic herbicidal mixture for the selective control of weeds and grasses in crops of cultivated plants, comprising a) a herbicide which inhibits the action of protoporphyrinogen oxidase; and b) a herbicide which inhibits the action of ALS/AHAS, or an ester or salt of any of the foregoing, or a combination thereof.

31. The synergistic herbicidal mixture of item 30, wherein the herbicide which inhibits the action of protoporphyrinogen oxidase is bifenox.

32. The synergistic herbicidal mixture of item 30 or 31, wherein the herbicide which inhibits the action of ALS/AHAS is florasulam.

33. The synergistic herbicidal mixture of any one of items 30-32, wherein the weight ratio of the herbicide which inhibits the action of protoporphyrinogen oxidase, to the herbicide which inhibits the action of ALS/AHAS is from 1:100 to 100:1.

34. The synergistic herbicidal mixture of item 33, wherein the weight ratio of the herbicide which inhibits the action of protoporphyrinogen oxidase, to the herbicide which inhibits the action of ALS/AHAS is from 90:1 to about 100:1

35. The synergistic herbicidal mixture of any one of items 30-34, wherein the herbicide which inhibits the action of protoporphyrinogen oxidase, and the herbicide which inhibits the action of ALS/AHAS are applied jointly or in a succession.

36. The synergistic herbicidal mixture of any one of items 30-35, wherein said mixture is used to provide a rate of application of from 0.1 to 10 liter/ha.

37. The synergistic herbicidal mixture of item 36, wherein said mixture is used to provide a rate of application of 1 liter/ha.

38. The synergistic herbicidal mixture of item 36, wherein said mixture is used to provide a rate of application of 1.5 liter/ha.

39. The synergistic herbicidal mixture of any one of items 30-35, wherein the mixture is applied in an amount of from 100 to 600 g/ha.

40. The synergistic herbicidal mixture of item 39, wherein the amount of the herbicide which inhibits the action of protoporphyrinogen oxidase is 480 g/ha and the amount of the herbicide which inhibits the action of ALS/AHAS is 5 g/ha.

41. A herbicidal synergistic composition for the selective control of weeds and grasses in crops of cultivated plants comprising a) a herbicide which inhibits the action of protoporphyrinogen oxidase; b) a herbicide which inhibits the action of ALS/AHAS; and c) at least one agriculturally acceptable carrier.

42. The composition of item 41, further comprising at least one surfactant, solid diluent, liquid diluent, or a combination thereof.

43. The composition of item 41 or 42, wherein the herbicide which inhibits the action of protoporphyrinogen oxidase is bifenox.

44. The composition of any one of items 41-43, wherein the herbicide which inhibits the action of ALS/AHAS is florasulam.

45. The composition of any one of items 40-44, wherein the weight ratio of the herbicide which inhibits the action of protoporphyrinogen oxidase, to the herbicide which inhibits the action of ALS/AHAS is from 1:100 to 100:1.

46. The composition of item 45, wherein the weight ratio of the herbicide which inhibits the action of protoporphyrinogen oxidase, to the herbicide which inhibits the action of ALS/AHAS is from 90:1 to about 100:1.

47. A method of controlling undesired vegetation comprising applying to a locus of the undesired vegetation a herbicidally effective amount of a mixture comprising a) a herbicide which inhibits the action of protoporphyrinogen oxidase; b) a herbicide which inhibits the action of ALS/AHAS, or an ester or salt of any of the foregoing, or a combination thereof.

48. The method of item 47, wherein the herbicide which inhibits the action of protoporphyrinogen oxidase is bifenox.

49. The method of item 47 or 48, wherein the herbicide which inhibits the action of ALS/AHAS is florasulam.

50. The method of any one of items 47-49, wherein said locus of the undesired vegetation contains a crop to be treated selected from the group consisting of cereals, wheat, winter wheat, spring wheat, barley, winter barley, spring barley, oats, triticale, cereal rye, winter durum wheat, spring durum wheat, winter oat, spring oat, fodder cereals, maize, grassland, and combinations thereof.

51. The method of any one of items 47-50, wherein the mixture is applied in an amount of from 100 to 600 g/ha.

52. The method of any one of items 47-50, wherein said mixture is used to provide a rate of application of from 0.1 to 10 liter/ha.

53. The method of any one of items 47-52, wherein the herbicide which inhibits the action of protoporphyrinogen oxidase, and the herbicide which inhibits the action of ALS/AHAS are applied jointly or in a succession.

54. A method of controlling undesired vegetation comprising applying to a locus of the undesired vegetation the composition of any one of items 12-21 and 41-46.

55. A kit comprising the herbicidal mixture of any one of items 1-3.

56. A herbicidal mixture comprising bifenox and florasulam, esters, salts and/or combinations thereof.

57. The synergistic herbicidal mixture of item 56, wherein the weight ratio of bifenox to florasulam is from 1:100 to 100:1.

58. The synergistic herbicidal mixture of item 56 or 57, wherein bifenox and florasulam are applied jointly or in a succession.

59. The synergistic herbicidal mixture of any one of items 56-58, wherein said mixture is used to provide a rate of application of from 0.1 to 10 liter/ha.

60. The synergistic herbicidal mixture of item 59, wherein said mixture is used to provide a rate of application of 1 liter/ha.

61. The synergistic herbicidal mixture of any one of items 56-60, wherein the mixture is applied in an amount of 485 g/ha.

62. The synergistic herbicidal mixture of item 61, wherein the amount of bifenox is 480 g/ha and the amount of florasulam is 5 g/ha.

**Claims**

1. A synergistic herbicidal mixture comprising bifenox and florasulam, esters, salts and/or combinations thereof.

2. The synergistic herbicidal mixture of claim 1, wherein the weight ratio of bifenox to florasulam is from 1:100 to 100:1.

3. The synergistic herbicidal mixture of claim 2, wherein the weight ratio of bifenox to florasulam is from 90:1 to about 100:1

4. A herbicidal composition comprising bifenox and florasulam, esters, salts and/or combinations thereof according to any one of claims 1-3; and an agriculturally acceptable carrier.

5. The herbicidal composition of claim 4, further comprising at least one additional component selected from the group of surfactants, solid diluents and liquid diluents.

Europäisches
Patentamt

European
Patent Office

Office européen
des brevets

# EUROPEAN SEARCH REPORT

Application Number

EP 19 19 8591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DOMINIQUE LEPI?CE ET AL: "Florasulam Primus) a new selective triazolopyrimidine sulfonanilide (ALS) herbicide to control broad-leaved weeds in cereals; Belgian Results from 1994 to 1997", MEDEDELINGEN - FACULTEIT LANDBOUWKUNDIGE EN TOEGEPASTE BIOLOGISCHE WETENSCHAPPEN UNIVERSITEIT GENT, vol. 63, no. 3a, 1 January 1998 (1998-01-01), pages 735-742, XP055009596, ISSN: 0368-9697 * pages 740, 742 * | 1-5 | INV. A01N37/48 A01N43/90 A01P13/00 |
| X | DE 199 19 951 A1 (NOVARTIS AG [CH]) 16 September 1999 (1999-09-16) * page 20, line 44 * | 1 | |
| A | LEPIECE D ET AL: "Florasulam Primus, a new selective herbicide for the control of broad-leaved weeds in young grass", MEDEDELINGEN VAN DE FACULTEIT LANDBOUWWETENSCHAPPEN UNIVERSITEIT GENT, RIJKSUNIVERSITEIT TE GENT, BE, vol. 64, no. 3b, 1 January 1999 (1999-01-01), pages 693-712, XP009184036, ISSN: 0368-9697 * the whole document * | 1-5 | |

TECHNICAL FIELDS SEARCHED (IPC)

A01N

The present search report has been drawn up for all claims

| Place of search | Date of completion of the search | Examiner |
|---|---|---|
| Munich | 2 December 2019 | Lorusso, Patrizia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 19 8591

This annex lists the patent family members relating to the patent documents cited in  the above-mentioned European search report.
The members are as contained in the European Patent Office EDP file on
The European Patent Office is in no way liable for these particulars which are merely given for the purpose of information.

02-12-2019

| Patent document cited in search report | | Publication date | Patent family member(s) | Publication date |
|---|---|---|---|---|
| DE 19919951 | A1 | 16-09-1999 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3652645 A

**Non-patent literature cited in the description**

- *Int. J. Agri. Biol.,* 2004, vol. 6 (1), 209-212
- **A. R. THOMPSON et al.** *Proc. Br. Crop Prot. Conf. - Weeds,* 1999, vol. 1, 73
- **COLBY S. R.** Calculation of the synergistic and antagonistic responses of herbicide combinations. *the journal Weeds,* 1967, vol. 15, 20-22